# EUROPÄISCHE PATENTANMELDUNG

(11) **EP 1 835 198 A2**
(43) Veröffentlichungstag der Anmeldung: **19.09.2007**
(21) Anmeldenummer: 07102699.1
(22) Anmeldetag: 20.02.2007
(51) Int. Cl.: F16D 65/21

(54) **Bremssattel für eine selbstverstärkende elektromechanische Scheibenbremse**

(30) Priorität: 16.03.2006 DE 102006012077
(71) Anmelder: ROBERT BOSCH GMBH, 70442 Stuttgart (DE)
(72) Erfinder: Cao, Chi-Thuan, 70825, Korntal-Muenchingen (DE); Hofmann, Dirk, 70439, Stuttgart (DE); Vollert, Herbert, 71665, Vaihingen/Enz (DE); Nagel, Willi, 71686, Remseck/Hochdorf (DE); Foitzik, Bertram, 74360, Ilsfeld (DE); Goetzelmann, Bernd, 71063, Sindelfingen (DE); Frick, Hans, 87487, Wiggensbach (DE); Winkelmann, Antje, 64342, Seeheim-Jugenheim (DE)

(57) **Zusammenfassung**

Die Erfindung betrifft einen Bremssattel für eine selbstverstärkende elektromechanische Scheibenbremse, die einen Rampenmechanismus als Selbstverstärkungseinrichtung aufweist. Die Erfindung schlägt vor, den Bremssattel geteilt mit einem Motorgehäuse (1) und einem Rampen (12) des Rampenmechanismus aufweisenden, verrippten Widerlager (2) auszubilden, die zum Bremssattel miteinander verbunden sind.

## Beschreibung

### Stand der Technik

Die Erfindung betrifft einen Bremssattel für eine selbstverstärkende elektromechanische Scheibenbremse mit den Merkmalen des Oberbegriffs des Anspruchs 1.

Selbstverstärkende elektromechanische Scheibenbremsen sind bekannt. Sie weisen eine elektromechanische Betätigungseinrichtung zur Bremsbetätigung, d. h. zum Drücken eines Reibbremsbelags gegen eine Bremsscheibe auf. Die elektromechanische Betätigungseinrichtung umfasst üblicherweise einen Elektromtor, ein mechanisches Untersetzungsgetriebe, üblicherweise in Form eines Zahnradgetriebes, und ein Rotations-/Translations-Umsetzungsgetriebe, das die rotatorische Antriebsbewegung des Elektromotors bzw. des Untersetzungsgetriebes in eine translatorische Bewegung zum Drücken des Reibbremsbelags gegen die Bremsscheibe wandelt. Als Rotations-/Translations-Umsetzungsgetriebe sind Gewindetriebe, Zahnstangengetriebe oder Nocken bekannt, die mittels des Elektromotors über das Untersetzungsgetriebe geschwenkt werden und den Reibbremsbelag gegen die Bremsscheibe drücken. Die Aufzählung ist nicht abschließend. Auch kann die Betätigungseinrichtung einen Linearantrieb, beispielsweise einen Elektromagneten oder ein Piezoelement anstelle des Elektromotors aufweisen. Dadurch kann das Rotations-/Translations-Umsetzungsgetriebe und vielfach auch ein Untersetzungsgetriebe entfallen.

Bremssättel bekannter elektromechanischer Scheibenbremsen weisen ein Motorgehäuse auf, in dem Komponenten der elektromechanischen Betätigungseinrichtung, insbesondere der Elektromotor oder Linearantrieb oder auch die elektromechanische Betätigungseinrichtung insgesamt, untergebracht sind. Das Motorgehäuse ist einstückiger und integraler Bestandteil der bekannten Bremssättel.

Als Selbstverstärkungseinrichtungen sind Rampenmechanismen bekannt. Diese weisen eine, vorzugsweise mehrere Rampen auf, die in einer Umfangsrichtung zu einer Bremsscheibe und in einem Winkel schräg zur Bremsscheibe, also schraubenlinienförmig zu einer Drehachse der Bremsscheibe, verlaufen. Eine Belagträgerplatte, an der ein Reibbremsbelag anbringbar ist, ist entlang der Rampen, also in Umfangsrichtung zur Bremsscheibe und in dem Winkel schräg zur Bremsscheibe verschiebbar geführt. Zur Bremsbetätigung wird der Reibbremsbelag mit der elektromechanischen Betätigungseinrichtung schraubenlinienförmig entlang der Rampen verschoben, so dass er gegen die Bremsscheibe drückt und diese bremst. Die drehende Bremsscheibe übt eine Reibungskraft auf den gegen sie gedrückten Reibbremsbelag aus, die den Reibbremsbelag in Richtung eines enger werdenden Keilspalts zwischen den Rampen und der Bremsscheibe beaufschlagt. Die Abstützung des Reibbremsbelags an den Rampen bewirkt aufgrund des zur Bremsscheibe schrägen Verlaufs der Rampen eine Abstützkraft senkrecht zu den Rampen, die eine Komponente senkrecht zur Bremsscheibe aufweist. Diese Kraftkomponente senkrecht zur Bremsscheibe ist eine Andruckkraft, die den Reibbremsbelag zusätzlich zu einer von der Betätigungseinrichtung aufgebrachten Andruckkraft gegen die Bremsscheibe drückt und dadurch die Andruckkraft des Reibbremsbelags gegen die Bremsscheibe und die Bremskraft der Scheibenbremse erhöht. Die Scheibenbremse weist dadurch eine Selbstverstärkung auf.

Die Verschiebung der Belagträgerplatte muss nicht zwingend in Umfangsrichtung, sondern kann beispielsweise auch in Sehnenrichtung zur Bremsscheibe verlaufen. Wesentlich ist, dass die von der drehenden Bremsscheibe auf den zum Bremsen gegen sie gedrückten Reibbremsbelag ausgeübte Reibungskraft den Reibbremsbelag und mit ihr die Belagträgerplatte in Richtung des enger werdenden Keilspalts zwischen den Rampen des Rampenmechanismus und der Bremsscheibe beaufschlagt.

Weisen die Rampen des Rampenmechanismus über ihren Verlauf einen konstanten Winkel bzw. eine konstante Steigung auf, spricht man auch von einem Keilmechanismus. Mit einem sich über den Verlauf der Rampen ändernden Rampenwinkel lassen sich eine Zuspanngeschwindigkeit und ein Selbstverstärkungsfaktor der Scheibenbremse in gewünschter Weise beeinflussen. Durch einen steilen Rampenwinkel zu Beginn der Verschiebung der Belagträgerplatte wird eine schnelle Zustellung und eine schnelle Überwindung eines Lüftspiels zwischen dem Reibbremsbelag und der Bremsscheibe erreicht, durch einen flachen Rampenwinkel am Ende der Verschiebung wird eine hohe Selbstverstärkung bei großer Andruck- und Bremskraft erzielt.

Die Bremsscheibe ist nicht Teil des Bremssattels, Bezugnahmen auf sie dienen der Darstellung der Lage und Anordnung der Teile am Bremssattel. Dabei ist von der Gebrauchslage des Bremssattels in Bezug auf die Bremsscheibe auszugehen.

Die Belagträgerplatte stützt sich beim Bremsen am Bremssattel ab, dieser Teil des Bremssattels wird als Widerlager bezeichnet. Der Rampenmechanismus kann Rampen am Widerlager und/oder an der Belagträgerplatte aufweisen, die aufeinander gleiten oder durch Wälzkörper wälzgelagert sind. Es können beispielsweise Wälzkörper in Lagerböcken oder dgl. ortsfest und drehbar an der Belagträgerplatte gelagert sein, die auf Rampen des Widerlagers wälzen oder umgekehrt.

Da die bekannten Bremssättel den Elektromotor, das Untersetzungsgetriebe und das Rotations-/Translations-Untersetzungsgetriebe der elektromechanischen Betätigungseinrichtung aufnehmen müssen sowie Teile des Rampenmechanismus aufweisen, sind sie aufwändig geformte, üblicherweise durch Druckguss hergestellte Metallteile. Die aufwändige Form erhöht die Herstellungskosten und den Ausschuss. Des weiteren müssen die Rampen oder jedenfalls deren Gleit- oder Laufflächen verschleißfest sein, d. h. aus einem Werkstoff ausreichender Härte bestehen. Es gibt die Möglichkeit, die Laufflächen in die Rampen einzusetzen oder auf sie aufzusetzen. Ansonsten muss der Bremssattel insgesamt aus dem harten Werkstoff hergestellt sein, der sich schlecht bearbeiten lässt, teuer und schwer ist.

### Erläuterung und Vorteile der Erfindung

Der erfindungsgemäße Bremssattel mit den Merkmalen des Anspruchs 1 ist geteilt, er weist das Motorgehäuse als ein Teil oder als Bestandteil eines Teils des Bremssattels und das Widerlager als weiteres Teil oder Bestandteil eines weiteren Teils des Bremssattels auf. Die genannten Teile des Bremssattels sind fest und lösbar oder unlösbar miteinander verbunden. Die Belagträgerplatte ist ein separates Teil, das mittels des Rampenmechanismus verschiebbar am Widerlager geführt ist.

Die Erfindung hat den Vorteil, dass das Widerlager mit dem Rampenmechanismus aus einem harten, verschleißfesten Werkstoff und das Motorgehäuse aus einem anderen, leichteren, besser bearbeitbaren, korrosionsfesten und/oder billigeren Werkstoff, beispielsweise aus Leichtmetall, hergestellt sein kann. Der erfindungsgemäß geteilt ausgeführte Bremssattel lässt sich einfacher montagefreundlich für die Komponenten der elektromechanischen Betätigungseinrichtung konstruieren. Bei bekannten einstückigen und integralen Bremssätteln ist der Einbau der Getriebewellen äußerst aufwändig und erfordert teilweise Deckel zum Verschließen und Abdichten von Montageöffnungen, die zur Montage der Getriebewellen notwendig sind. Mit dem erfindungsgemäß geteilten Bremssattel sind solche Nachteile vermeidbar.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand eines in der Zeichnung dargestellten Ausführungsbeispiels näher erläutert. Es zeigen:
- Figur 1: eine perspektivische Explosionsdarstellung eines erfindungsgemäßen Bremssattels; und
- Figur 2: einen Schnitt entlang der abgewinkelten Schnittlinie II-II in Figur 1.

### Beschreibung des Ausführungsbeispiels

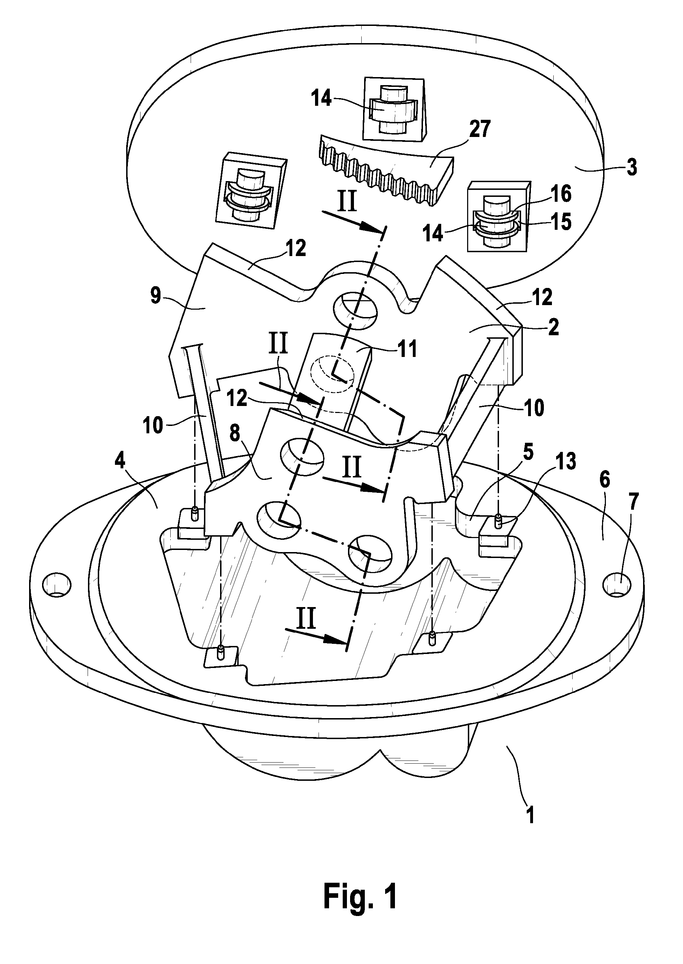

Der in Figur 1 dargestellte Bremssattel ist für eine selbstverstärkende elektromechanische Scheibenbremse vorgesehen. Er weist ein Motorgehäuse 1, ein Widerlager 2 und eine Belagträgerplatte 3 auf. Das Motorgehäuse 1 ist ein Gussteil aus Leichtmetall, beispielsweise aus einer Aluminiumlegierung. Es ist auf einer Seite offen, das Widerlager 2 und die Belagträgerplatte 3 sind an der offenen Seite des Motorgehäuses 1 angeordnet. Das Widerlager 2 ragt zum Teil in das Motorgehäuse 1 hinein. Das Motorgehäuse 1 weist eine Art Grundplatte 4 mit ungefähr elliptischer Form auf, von der das eigentliche Motorgehäuse 1 auf einer Seite absteht. Die Grundplatte 4 weist eine großflächige Durchbrechung als Öffnung 5 auf. In einer Längsrichtung ist die ungefähr elliptische Grundplatte 4 zu nach außen abstehenden Laschen 6 verlängert, die mit der Grundplatte 4 zusammen eine Art Sattelplatte des als Rahmensattel ausgebildeten Bremssattels bilden. In einer Gebrauchslage ist der Bremssattel mit seiner die Sattelplatte 4, 6 bildenden Grundplatte 4 und Laschen 6 parallel zu einer nicht dargestellten Bremsscheibe auf einer Seite der Bremsscheibe angeordnet. In den Laschen 6 sind Löcher 7 angebracht, in die nicht dargestellte Zuganker eingesetzt und verschraubt sind. Die nicht dargestellten Zuganker verlaufen quer zur nicht dargestellten Bremsscheibe außerhalb deren Umfangs und verbinden die das Motorgehäuse 1 aufweisende Sattelplatte 4, 6 mit einer zweiten, ebenfalls nicht dargestellten Sattelplatte des Bremssattels. Die zweite Sattelplatte ist parallel zur Bremsscheibe und zu der das Motorgehäuse 1 aufweisenden Sattelplatte 4, 6 auf einer dem Motorgehäuse 1 gegenüber liegenden Seite der Bremsscheibe angeordnet. Die Zuganker sind einstückig mit der zweiten Sattelplatte. In der zweiten Sattelplatte, bei der es sich um ein flaches, plattenförmiges, in Draufsicht in etwa trapezförmiges Bauteil handelt, ist ein Reibbremsbelag angeordnet, der beim Bremsen durch Verschiebung des Bremssattels quer zur Bremsscheibe von einer Seite gegen diese gedrückt wird. Der Bremssattel ist ein sog. Schwimmsattel, d. h. er ist quer zur Bremsscheibe verschieblich.

Das Widerlager 2 ist ein verripptes Teil, es weist zwei Längsrippen 8, 9 auf, die durch Querrippen 10, 11 in ihren Endbereichen und in ihrer Mitte verbunden sind. Durch die Verrippung ist das Widerlager 2 steif, insbesondere biege- und torsionssteif. Es ist einstückig als Stahlgussteil aus einem harten, verschleißfesten Werkstoff hergestellt.

Die Längsrippen 8, 9 des Widerlagers 2 weisen in ihrer Längsrichtung einen kreisbogenförmigen Verlauf, d. h. sie sind zylinder- oder kegelmantelförmig. Eine gedachte Achse der kreisbogenförmigen Längsrippen 8, 9 fällt mit einer gedachten Drehachse der Bremsscheibe zusammen, ein Radius einer inneren Längsrippe 8 ist kleiner als ein Radius einer äußeren Längsrippe 9. Wenn in der Beschreibung auf die nicht dargestellte Bremsscheibe Bezug genommen wird, geschieht dies aus Gründen einer verständlichen Darlegung. Gemeint ist eine Gebrauchslage des Bremssattels in Bezug auf die Bremsscheibe, d. h. die Grundplatte 4 des Gehäuses 1 ist parallel zur Bremsscheibe auf einer Seite der Bremsscheibe angeordnet. Die Bremsscheibe ist nicht Bestandteil des Bremssattels.

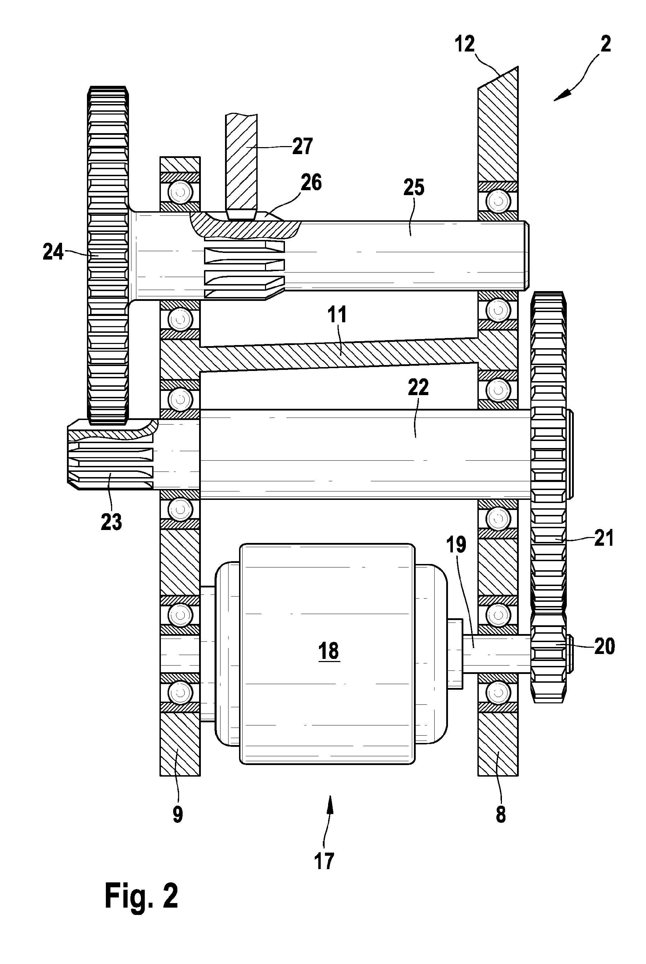

Die innere Längsrippe 8 des Widerlagers 2 weist eine Rampe 12 auf. Ihr dem Motorgehäuse 1 abgewandter Rand verläuft auf einem Abschnitt schräg in einem Winkel zur Grundplatte 4 und damit zur Bremsscheibe. Dieser Rand bildet die Lauffläche der Rampe 12. Die äußere Längsrippe 9 weist zwei solche Rampen 12 auf. Im Bereich der Laufflächen sind die Rampen 12 gehärtet, um ihre Verschleißfestigkeit und Tragfähigkeit zu erhöhen. Die Rampen 12 weisen eine Querneigung jeweils nach innen auf (vgl. Figur 2).

Das Motorgehäuse 1 mit der Grundplatte 4 und das Widerlager 2 sind durch eine Passstiftverbindung 13 fest miteinander zum erfindungsgemäßen Bremssattel verbunden. Der Bremssattel umfasst das verrippte Widerlager 2 mit den die Rampen 12 aufweisenden Längsrippen 8, 9 und das Motorgehäuse 1 mit der Grundplatte 4, die gemeinsam mit den in einer Ebene von ihr abstehenden Laschen 6 die eine Sattelplatte des Bremssattels bildet.

Die Belagträgerplatte 3 ist der klaren Darstellung wegen in Figur 1 um 90° nach oben/hinten gekippt dargestellt, so dass ihre dem Widerlager 2 zugewandte Seite sichtbar ist. Auf ihrer in der Zeichnung nicht sichtbaren, dem Widerlager 2 abgewandten und in der Gebrauchslage des Bremssattels der nicht dargestellten Bremsscheibe zugewandten Vorderseite ist ein Reibbremsbelag angeordnet. Der Reibbremsbelag ist von der Belagträgerplatte 3 verdeckt und deswegen in der Zeichnung nicht sichtbar. Auf der in Figur 1 sichtbaren, dem Widerlager 2 zugewandten Seite weist die Belagträgerplatte 3 drei im Durchmesser gestufte zylindrische Wälzkörper 14 auf. Die Wälzkörper 14 liegen drehbar gelagert in Taschen 15 in der Belagträgerplatte 3 ein. In montiertem Zustand wälzen die Wälzkörper 14 auf den Laufflächen der Rampen 12 des Widerlagers 2. Durch diese Wälzlagerung ist die Belagträgerplatte 3 in Verlaufsrichtung der Rampen 12 verschiebbar am Bremssattel geführt. Die Verschieberichtung der Belagträgerplatte 3 ist eine schraubenlinienförmige Bahn mit der Drehachse der Bremsscheibe als Zentrum. Die Verschiebung der Belagträgerplatte 3 erfolgt in Umfangsrichtung und schräg in einem Winkel zur Bremsscheibe. Zur Bremsbetätigung wird die Belagträgerplatte 3 entlang der Rampen 12 des Widerlagers verschoben, so dass ihr Reibbremsbelag in Anlage an die Bremsscheibe gelangt und gegen diese gedrückt wird. Die drehende Bremsscheibe übt eine Reibungskraft auf den gegen sie gedrückten Reibbremsbelag aus, die den Reibbremsbelag und mit ihm die Belagträgerplatte 3 in Richtung eines enger werdenden Keilspalts zwischen den Rampen 12 und der Bremsscheibe beaufschlagt. Die Abstützung der Belagträgerplatte 3 an den Rampen 12 bewirkt eine Andruckkraft des Reibbremsbelags gegen die Bremsscheibe und erhöht dadurch eine Bremskraft. Dadurch wird eine Selbstverstärkung erzielt. Die mit den Wälzkörpern 14 zusammen wirkenden Rampen 12 bilden eine Selbstverstärkungseinrichtung mit einem Rampenmechanismus.

Die Wälzkörper 14 sind entsprechend der Laufflächen der Rampen 12 geneigt. Sie stützen die Belagträgerplatten 3 an den Ecken eines gedachten Dreiecks ab, sie bilden eine statisch bestimmte Dreipunktabstützung der Belagträgerplatte 3 am Widerlager 2. Die beiden Wälzkörper 14, die auf den Rampen 12 der äußeren Längsrippe 9 wälzen, weisen Führkränze 16 auf, die die Laufflächen der Rampen 12 seitlich übergreifen und die Belagträgerplatte 3 dadurch in Längsrichtung der Rampen 12 führen. Durch die entgegengesetzte Querneigung der Rampen 12, der inneren und der äußeren Längsrippen 8, 9 wird ebenfalls eine Führung bewirkt. Der Wälzkörper 14, der auf der Rampe 12 der inneren Längsrippe 8 wälzt, weist keine Führkränze auf, so dass die Führung der Belagträgerplatte 3 bestimmt und nicht überbestimmt ist.

Der Bremssattel weist eine elektromechanische Betätigungseinrichtung 17 auf, die in dem in Figur 2 dargestellten abgewinkelten Querschnitt des Widerlagers 2 zu sehen ist. Zwischen die Längsrippen 8, 9 ist ein Elektromotor 18 eingesetzt, dessen Motorwelle 19 drehbar in den Längsrippen 8, 9 gelagert ist. Ein kleines Zahnrad 20 des Elektromotors 18 kämmt mit einem großen Zahnrad 21, dessen Welle 22 drehbar in den Längsrippen 8, 9 des Widerlagers 2 gelagert ist. Auf der gegenüberliegenden Seite weist die Welle 22 ein Ritzel 23 auf, das mit einem zweiten großen Zahnrad 24 kämmt. Eine Welle 25 des zweiten großen Zahnrads ist ebenfalls drehbar in den Längsrippen 8, 9 des Widerlagers 2 gelagert. Auch diese Welle 25 weist ein Ritzel 26 auf, das mit einer Zahnstange 27 kämmt, die von der Belagträgerplatte 3 absteht. Die Zahnstange 27 verläuft wie die Längsrippen 8, 9 und die Rampen 12 kreisbogenförmig um die Drehachse der Bremsscheibe, die Zahnstange 27 weist die gleiche Steigung (nicht den gleichen Winkel zur Bremsscheibe!) wie die Rampen 12 auf.

Die Zahnräder 21, 24 und die Ritzel 23, 26 bilden ein Untersetzungsgetriebe, ihre Wellen 22, 25 sind Getriebewellen. Die Zahnstange 27 und das mit ihr kämmende Ritzel 26 bilden ein Rotations-/Translations-Umsetzungsgetriebe, das eine Drehbewegung des Elektromotors 18 bzw. der Getriebewellen 22, 25 in eine translatorische Verschiebebewegung der Belagträgerplatte 3 wandelt. Durch drehenden Antrieb des Elektromotors 18 wird die Belagträgerplatte 3 in oben beschriebener Weise entlang der Rampen 12 verschoben und dadurch die Scheibenbremse betätigt oder gelöst. Der Elektromotor 18, das Untersetzungsgetriebe mit den beiden großen Zahnrädern 21, 24 und den beiden Ritzeln 23, 26 und das Zahnstangengetriebe mit der Zahnstange 27 und dem mit ihr kämmenden Ritzel 26 bilden eine elektromechanische Betätigungseinrichtung des Bremssattels bzw. der Scheibenbremse. Die Getriebewellen 22, 25 des Untersetzungsgetriebes sind in den Längsrippen 8, 9 des Widerlagers 2 gelagert. Das Widerlager 2 bildet mit dem Elektromotor 18 und dem Untersetzungsgetriebe 21, 23, 24, 26 eine Vormontage-Baugruppe, die montiert und anschließend mit dem Motorgehäuse 1 zum Bremssattel verbunden werden kann. Ein Achsabstand der Getriebewellen 22, 25 und der Motorwelle 19 ist durch die Lagerung der Wellen 19, 22, 25 in den Längsrippen 8, 9 des Widerlagers 2 mit kleiner Toleranz einhaltbar. Sind das Widerlager 2 und das Motorgehäuse 1 zum Bremssattel verbunden, befindet sich der Elektromotor 18 und zumindest die erste Getriebewelle 22 mit dem ersten großen Zahnrad 21 innerhalb des Motorgehäuses 1.

## Patentansprüche

1. Bremssattel für eine selbstverstärkende elektromechanische Scheibenbremse, wobei der Bremssattel ein Motorgehäuse (1), eine Belagträgerplatte (3) und ein Widerlager (2) aufweist, an dem die Belagträgerplatte (3) verschiebbar geführt ist, und wobei die Belagträgerplatte (3) und das Widerlager (2) einen Rampenmechanismus (12, 14) zur verschiebbaren Führung der Belagträgerplatte (3) als Selbstverstärkungseinrichtung aufweisen, der die Belagträgerplatte (3) in einer Umfangsrichtung zu einer Bremsscheibe und in einem Winkel schräg zur Bremsscheibe führt, **dadurch gekennzeichnet, dass** der Bremssattel geteilt ist, so dass das Motorgehäuse (1) ein Teil und das Widerlager (2) ein anderes Teil des Bremssattels bilden, die miteinander verbunden sind.

2. Bremssattel nach Anspruch 1, **dadurch gekennzeichnet, dass** das Widerlager (2) ein verripptes Teil ist.

3. Bremssattel nach Anspruch 1, **dadurch gekennzeichnet, dass** das Widerlager (2) Lagerstellen für eine Getriebewelle (22, 25) aufweist.

4. Bremssattel nach Anspruch 3, **dadurch gekennzeichnet, dass** das Widerlager (2) eine Vormontage-Baugruppe mit einem mechanischen Untersetzungsgetriebe (21, 23, 24) zum Antrieb der Belagträgerplatte (3) bildet.

5. Bremssattel nach Anspruch 3, **dadurch gekennzeichnet, dass** eine Motorwelle (19) eines Elektromotors (18) am Widerlager (2) drehbar gelagert ist.

6. Bremssattel nach Anspruch 5, **dadurch gekennzeichnet, dass** der Elektromotor (18) am Widerlager (2) befestigt ist.
